Europäisches Patentamt

European Patent Office

Office européen des brevets

(11) Veröffentlichungsnummer: **0 292 731 B1**

(12) **EUROPÄISCHE PATENTSCHRIFT**

(45) Veröffentlichungstag der Patentschrift: **27.11.91**

(51) Int. Cl.5: **C09D 5/44**, C08G 59/54, C08G 59/40

(21) Anmeldenummer: **88106878.7**

(22) Anmeldetag: **29.04.88**

(54) Selbstvernetzende kationische Lackbindemittel auf Basis von ureidmodifizierten Epoxidharzen und deren Herstellung.

(30) Priorität: **18.05.87 AT 1248/87**

(43) Veröffentlichungstag der Anmeldung:
**30.11.88 Patentblatt 88/48**

(45) Bekanntmachung des Hinweises auf die
Patenterteilung:
**27.11.91 Patentblatt 91/48**

(84) Benannte Vertragsstaaten:
**BE CH DE ES FR GB IT LI NL SE**

(56) Entgegenhaltungen:
**EP-A- 0 017 215**
**DE-A- 3 542 569**
**DE-A- 3 634 483**

(73) Patentinhaber: **VIANOVA KUNSTHARZ AKTIEN-GESELLSCHAFT**
**Postfach 191 Leechgasse 21**
**A-8011 Graz(AT)**

(72) Erfinder: **Paar, Willibald, Dr.**
**Schanzelg. 19**
**A-8010 Graz(AT)**

Rank Xerox (UK) Business Services

**Beschreibung**

Die Erfindung betrifft selbstvernetzende kationische Lackbindemittel auf Basis von ureidmodifizierten Epoxidharzen, sowie die Herstellung dieser Produkte und ihre Verwendung, insbesonders in Elektrotauchlacken.

Die Modifizierung von Epoxidharzen bei der Herstellung von kationischen Lackbindemitteln ist in vielfältiger Weise in der Patentliteratur beschrieben. Die Modifikationen dienen neben der Einführung protonisierbarer Gruppen im wesentlichen entweder einer Verlängerung der Polymerkette durch di- oder gegebenenfalls mehrfunktionelle Verbindungen oder dem Einbau von Gruppen, die zur Vernetzung der applizierten Lackfilme dienen.

Die bei der Kettenverlängerung eingesetzten Molekülbausteine können entweder einfache difunktionelle Verbindungen, wie Diphenole, Diole oder Dicarbonsäuren oder bereits komplexer aufgebaute Zwischenprodukte sein, die neben ihrer Funktion der Kettenverlängerung auch filmbeeinflussende Gruppen, wie längere Kohlenwasserstoffreste, Polyglykolreste, Harnstoff- oder Amidgruppen, aufweisen.

Vernetzungsfähige Gruppen wie polymerisierbare Doppelbindungen oder blockierte Isocyanatgruppen werden durch Reaktion entsprechender Monoisocyanatverbindungen mit den Hydroxylgruppen des Harzes eingeführt.

Es wurde nun gefunden, daß durch den Einbau von Ureidgruppen und blockierte Isocyanatgruppen, sowie gegebenenfalls tertiäre Aminogruppen aufweisenden Carboxylverbindungen die Eigenschaften von kationischen Bindemitteln bzw. der daraus hergestellten Überzüge weiter verbessert werden können.

Die Erfindung betrifft demgemäß selbstvernetzende kationische Lackbindemittel auf der Basis von aminmodifizierten Epoxidharzestern, welche dadurch gekennzeichnet sind, daß sie durch Veresterung von
5 bis 100, vorzugsweise 60 bis 100 Mol-% der Epoxidgruppen von Di- oder Polyepoxidharzen mit einem Epoxidäquivalentgewicht von 160 bis ca. 2000 mit Carboxylverbindungen der Formel

HOOC - R$_1$ - CO - NR$_2$ - CO - NH - R$_3$ - /NCO/ ,

wobei

R$_1$        einen gesättigten oder ungesättigten, aliphatischen , cycloaliphatischen oder aromatischen Kohlenwasserstoffrest,

R$_2$        einen gegebenenfalls eine tert. Aminogruppe aufweisenden aliphatischen Kohlenwasserstoffrest,

R$_3$        einen aliphatischen, cycloaliphatischen oder aromatischen Kohlenwasserstoffrest,

- /NCO/        eine blockierte Isocyanatgruppe darstellt, sowie gegebenenfalls die Gruppe -NR$_2$-CO-NH-R$_3$-/NCO/ eine aus einem substituierten Harnstoff oder einem substituierten Biuret entstandener Rest ist, der mindestens eine blockierte Isocyanatgruppe und gegebenenfalls eine tertiäre Aminogruppe aufweist,

und Umsetzung der verbleibenden Epoxidgruppen des Reaktionsproduktes mit primären und/oder sekundären Aminen, sowie gegebenenfalls weiteren für diese Harze üblichen Modifikatoren zu einem epoxidgruppenfreien, aminmodifizierten Epoxidharzester mit einer Aminzahl von mindestens 30 mg KOH/g erhalten wurden.

Die Erfindung betrifft weiters das Verfahren zur Herstellung dieser selbstvernetzenden kationischen Lackbindemittel auf der Basis von aminmodifizierten Epozidharzestern, welches dadurch gekennzeichnet ist, daman 5 bis 100, vorzugsweise 60 bis 100 Mol-% der Epoxidgruppen eines Epoxidharzes mit einem Epoxidäquivalent von 160 bis 2000 mit einer Carboxylverbindung der Formel

HOOC-R$_1$-CO-NR$_2$-CO-NH-R$_3$-/NCO/,

wobei die Reste die oben angegebene Bedeutung haben und, in getrennten Verfahrensschritten oder gemeinsam, mit primären und/oder sekundären Aminen, sowie gegebenenfalls weiteren für diese Harze üblichen Modifikatoren umsetzt, wobei die Mengenverhältnisse so gewählt werden, daß das Endprodukt keine freien Epoxidgruppen und eine Aminzahl von mindestens 30 mg KOH/g aufweist.

Weiters betrifft die Erfindung die Verwendung der erfindungsgemäßen kationischen Lackbindemittel zur Formulierung von nach Protonierung wasserverdünnbaren Einbrennlacken, insbesonders von kathodisch abscheidbaren Elektrotauchlacken.

Die erfindungsgemäß eingesetzten Carboxylverbindungen der Formel

HOOC-R$_1$-CO-NR$_2$-CO-NH-R$_3$-/NCO/,

wobei

R$_1$        einen gesättigten oder ungesättigten, aliphatischen , cycloaliphatischen oder aromatischen Kohlenwasserstoffrest,

R$_2$        einen gegebenenfalls eine tert. Aminogruppe aufweisenden aliphatischen Kohlenwasserstoffrest,

R$_3$        einen aliphatischen, cycloaliphatischen oder aromatischen Kohlenwasserstoffrest,

- /NCO/ eine blockierte Isocyanatgruppe darstellt, sowie gegebenenfalls die Gruppe -NR$_2$-CO-NH-R$_3$-/NCO/ ein aus einem substituierten Harnstoff oder einem substituierten Biuret entstandener Rest ist, der mindestens eine blockierte Isocyanatgruppe und gegebenenfalls eine tertiäre Aminogruppe aufweist,

werden durch Umsetzung eines noch mindestens ein am Stickstoff gebundenes H-Atom aufweisenden, substituierten Harnstoffes oder eines substituierten Biurets mit einem Dicarbonsäureanhydrid oder einer Dicarbonsäureanhydridgruppen aufweisenden Verbindung erhalten.

Der substituierte Harnstoff kann in vielfältiger Weise erhalten werden. Als vorteilhaft haben sich dabei Umsetzungsprodukte aus primären Aminen und halbblockierten Diisocyanaten erwiesen, wobei primär-tertiäre Diamine, wie N,N-Dialkylaminoalkylamine, besonders bevorzugt werden. Durch die Anwesenheit der tertiären Aminogruppe werden einerseits wahrscheinlich die Reaktionen bei der Herstellung der Bindemittel katalysiert, andererseits bereits ein Teil der protonierbaren Stickstoffgruppen eingebaut.

Eine andere Gruppe von vorteilhaft einsetzbaren substituierten Harnstoffen wird aus sekundären Aminen, wie sie bei der Aminoalkylierung von Phenolen mit primären Aminen und Formaldehyd erhalten werden, durch Umsetzung mit halbblockierten Diisocyanaten hergestellt. Solche Reaktionsprodukte sind beispielsweise in der EP-A-0 209 857 oder der AT-PS 382 633 als Zwischenprodukte beschrieben.

Entsprechende substituierte Biuretverbindungen sind beispielsweise in der AT-PS 387 974 beschrieben, wobei diese Zwischenprodukte durch Umsetzung der obengenannten substituierten Harnstoffe mit halbblockierten Diisocyanaten erhalten werden.

Als Dicarbonsäureanhydride werden z. B. o-Phthalsäureanhydrid , Tetrahydro-, Endomethylentetrahydro- und Hexahydrophthalsäureanhydrid, deren Kernsubstitutionsprodukte, Maleinsäureanhydrid oder Bernsteinsäureanhydrid verwendet.

In einer besonderen Ausführungsform werden als Dicarbonsäuregruppen aufweisende Verbindungen Additionsverbindungen von Maleinsäureanhydrid an isolierte Doppelbindungen aufweisende längerkettige Verbindungen, wie die natürlich vorkommenden oder künstlich hergestellten Polyolester von trocknenden Fettsäuren oder die flüssigen Dienpolymerisate, z. B. die relativ niedrigmolekularen Polybutadiene, eingesetzt. Die Bernsteinsäureanhydridkonfiguration dieser Additionsverbindungen ist zur Ureidbildung befähigt.

Die Ureidbildung erfolgt bei 80 bis 120° C und wird bis zum Erreichen der einer freien Carboxylgruppe entsprechenden Säurezahl geführt.

Die so erhaltenen Carboxylverbindungen werden bei 70 bis 120° C mit einem Di- oder Polyepoxidharz vollständig umgesetzt. Die für die erfindungsgemäßen Produkte bevorzugten Epoxidharze sind die Diglycidylether des Bisphenol A oder Bisphenol F, die Polyglycidylether von Novolakharzen, sowie gegebenenfalls in Mischung mit diesen, die Diglycidylether von Polyolen.

Erfindungsgemäß werden 5 bis 100, vorzugsweise 60 bis 100 Mol-% der Epoxidgruppen des Epoxidharzes mit der Carboxylverbindung umgesetzt. Die gegebenenfalls verbleibenden Epoxidgruppen werden in bekannter Weise mit primären oder sekundären Aminen, Carbonsäuren, Phenolen u. a. defunktionalisiert, wobei die Mengenverhältnisse so gewählt werden, daß das epoxidgruppenfreie Endprodukt eine Aminzahl von mindestens 30 mg KOH/g aufweist. Als Amine werden für diesen Zweck vorzugsweise Alkanolamine, wie Diethanolamin, Diisopropanolamin, Methylethanolamin oder primäre Amine, wie Dimethylaminopropylamin oder Diethylaminopropylamin, eingesetzt.

Die erfindungsgemäß hergestellten Bindemittel sind nach partieller Neutralisation der basischen Gruppen mit Wasser verdünnbar und bilden nach dem Verdünnen stabile klare bis opake Lösungen. Sie werden vor der Verarbeitung gegebenenfalls mit Pigmenten, Füllstoffen, Katalysatoren und anderen Lackhilfsmitteln versetzt. Die Herstellung solcher wasserverdünnbarer Lacke ist dem Fachmann bekannt und muß, ebenso wie die möglichen Verarbeitungstechnologien, nicht beschrieben werden. Die bevorzugte Auftragsmethode für die Lacke auf Basis der erfindungsgemäßen Bindemittel ist die Elektrotauchlackierung, wobei die Produkte aufgrund ihres kationischen Charakters an der Kathode abgeschieden werden.

Die Produkte sind bei erhöhter Temperatur nach Entblockung der Isocyanatgruppen durch Urethanbildung selbstvernetzend. Selbstverständlich können die Lacke auch weitere Vernetzungskomponenten oder Zusatzharze enthalten.

Die folgenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten.

Beispiel 1:

(a) Herstellung der Carboxylverbindung

130 g Diethylaminopropylamin (1 Mol) werden in 244 g Toluol gelöst und bei 60 bis 70° C mit 304 g eines mit 2-Ethylhexanol halbblockierten Toluylendiisocyanats (1 Mol) bis zu einem NCO-Wert von 0 umgesetzt. Nach Zugabe von 148 g o-Phthalsäureanhydrid (1 Mol) wird die Temperatur auf 100°C erhöht und die Reaktion bis zur einer freien COOH-Gruppe entsprechenden Säurezahl geführt.

(b) Modifizierung des Epoxidharzes

Zu der nach (a) erhaltenen Lösung werden 400 g Ethoxypropanol, 60 g Aminoethylpropandiol (0,5 Mol) und 950 g eines handelsüblichen Epoxidharzes auf Basis Bisphenol A (EEW 475) zugesetzt und die Reaktion bei 85 bis 90°C bis zu einem Epoxidwert von 0 reagiert. Das Produkt hat eine Aminzahl von 58 mg KOH/g und ist nach Zugabe von 45 Millimol Ameisensäure pro 100 g Festharz wasserlöslich.

(c) Prüfung als Klarlack

Nach Zugabe von 1 Gew.-% Zinn (als Dibutylzinndilaurat, bezogen auf Festharz) und der oben angegebenen Menge Ameisensäure wird der Ansatz mit destilliertem Wasser auf einen Festkörpergehalt von 15% verdünnt. In diesem Klarlack werden als Kathode geschaltete zinkphosphatierte Stahlbleche beschichtet. Die Beschichtungen werden 20 Minuten bei 160°C eingebrannt und weisen bei einer Schichtstärke von 22 ± 2 μm eine Beständigkeit gegenüber 300 Doppelhüben mit Methylethylketon auf.

Beispiel 2

(a) Herstellung der Carboxylverbindung

130 g Diethylaminopropylamin (1 Mol) werden in 240 g Toluol gelöst und bei 70 bis 80°C mit 608 g eines mit 2-Ethylhexanol halbblockierten Toluylendiisocyanats (2 Mol) bis zu einem NCO-Wert von 0 reagiert. Nach Zugabe von 800 g eines Polybutadien-Maleinsäureanhydrid-Additionsproduktes (1 Mol Anhydridgruppen, Herstellung siehe unten) wird der Ansatz bis zum Erreichen der Säurezahl, welche einer freien COOH-Gruppe entspricht, reagiert.

(b) Modifizierung des Epoxidharzes

Zu der nach (a) erhaltenen Lösung werden 452 g Methoxypropanol, 105 g Diethanolamin (1 Mol) und 950 g des auch im Beispiel 1 eingesetzten Epoxidharzes zugesetzt und die Reaktion bei 100°C bis zu einem Epoxidwert von 0 geführt. Das Produkt wird mit Methoxypropanol auf einen Festkörpergehalt von 60 % verdünnt und weist eine Aminzahl von 43 mg KOH/g auf und ist nach Zugabe von 45 Millimol Ameisensäure pro 100 g Festharz wasserverdünnbar.

(c) Prüfung als Klarlack

Nach Zugabe von 0,8 % Zinn (als Dibutylzinndilaurat, bezogen auf Festharz) und der oben angegebenen Menge an Ameisensäure wird der Ansatz mit destilliertem Wasser auf einen Festkörpergehalt von 15 % verdünnt. Aus diesem Klarlack auf zink-phosphatiertem Stahlblech kathodisch abgeschie-dene Filme zeigen nach Einbrennen (25 Minuten / 150°C ) bei einer Schichtstärke von 22 ± 2 μm eine Beständigkeit gegenüber 400 Doppelhüben mit Methylisobutylketon.

(d) Herstellung des Polybutadien-Maleinsäureanhydrid-Additionsproduktes

700 Tle eines handelsüblichen niedrigviskosen Polybutadiens mit einem Molekulargewicht von ca. 1500 ± 15 und ca. 75 % 1,4-cis-Doppelbindungen, ca. 24 % 1,4-trans-Doppelbindungen und ca. 1 % Vinyl-Doppelbindungen werden bei 200°C mit 100 Tlen Maleinsäureanhydrid bis zur vollständigen Anlagerung des Maleinsäureanhydrids reagiert.

Beispiel 3

(a) Herstellung der Carboxylverbindung

220 g Nonylphenol (1 Mol) werden mit 102 g Dimethylaminopropylamin (1 Mol) und 33 g Paraformaldehyd (91 %ig; 1 Mol) in Anwesentheit von 100 g Toluol als Azeotropschleppmittel so weit umgesetzt, bis die stöchiometrische Menge an Reaktionswasser abgetrennt ist. Bei 50°C wird der Ansatz mit 312 g eines mit Ethylenglykolmonomethylether halbblockierten Isophorondiisocyanats (1 Mol) versetzt und bei dieser Temperatur bis zu einem NCO-Wert von 0 reagiert. Nach Zugabe von 152 g Tetrahydrophthalsäureanhydrid (1 Mol) wird die Reaktion bei 85 bis 90°C bis zu der einer freien COOH-Gruppe entsprechenden Säurezahl geführt.

(b) Modifizierung des Epoxidharzes

Zu dem nach (a) erhaltenen Zwischenprodukt wird eine Lösung von 475 g eines Epoxidharzes auf Basis von Bisphenol A (EEW 475) in 200 g Diethylenglykoldimethylether zugegeben und der Ansatz bei 90 bis 95°C bis zu einem Epoxidwert von 0 reagiert. Das Produkt wiest eine Aminzahl von 44 mg KOH/g auf und ist nach Zugabe von 50 Millimol Ameisensäure pro 100 g Festharz wasser-löslich.

(c) <u>Prüfung als Klarlack</u>

Nach Zugabe von 1,5 Gew-% Blei (als Bleioctoat, bezogen auf Festharz) und der oben angegebenen Neutralisationsmittelmenge wird der Ansatz mit destilliertem Wasser auf einen Festkörpergehalt von 15 % verdünnt. Aus diesem Klarlack werden Filme auf zinkphosphatiertem Stahlblech abgeschieden und 30 Minuten bei 160 °C eingebrannt. Die Filme zeigen bei Schichtstärken von 22 ± 2 $\mu$m ausgezeichnete Beständigkeit bei Wasserdampf- und Salznebelbelastung.

**Patentansprüche**
**Patentansprüche für folgende Vertragsstaaten : BE, CH, DE, FR, GB, IT, NL, SE**

1. Selbstvernetzende kationische Lackbindemittel auf der Basis von aminmodifizierten Epoxidharzestern, <u>dadurch gekennzeichnet</u>, daß sie durch Veresterung von

   5 bis 100 , vorzugsweise 60 bis 100 Mol-% der Epoxidgruppen von Di- oder Polyepoxidharzen mit einem Epoxidäquivalentgewicht von 160 bis ca. 2000 mit Carboxylverbindungen der Formel

   HOOC - $R_1$ - CO - $NR_2$ - CO - NH - $R_3$ - /NCO/ ,

   wobei
   $R_1$      einen gesättigten oder ungesättigten, aliphatischen , cycloaliphatischen oder aromatischen Kohlenwasserstoffrest
   $R_2$      einen gegebenenfalls eine tert. Aminogruppe aufweisenden aliphatischen Kohlenwasserstoffrest
   $R_3$      einen aliphatischen, cycloaliphatischen oder aromatischen Kohlenwasserstoffrest,
   - /NCO/      eine blockierte Isocyanatgruppe, darstellt
   sowie gegebenenfalls die Gruppe -$NR_2$-CO-NH-$R_3$-/NCO/ ein aus einem substituierten Harnstoff oder einem substituierten Biuret entstandener Rest ist, der mindestens eine blockierte Isocyanatgruppe und gegebenenfalls eine tertiäre Aminogruppe aufweist,
   und Umsetzung der verbleibenden Epoxidgruppen des Reaktionsproduktes mit primären und/oder sekundären Aminen, sowie gegebenenfalls weiteren für diese Harze üblichen Modifikatoren zu einem epoxidgruppenfreien, aminmodifizierten Epoxidharzester mit einer Aminzahl von mindestens 30 mg KOH/g erhalten wurden.

2. Lackbindemittel nach Anspruch 1, dadurch gekennzeichnet, daß die Carboxylverbindung ein Umsetzungsprodukt eines substituierten Harnstoffs oder eines substituierten Biurets mit einem Dicarbonsäureanhydrid oder einer Dicarbonsäureanhydridgruppen aufweisenden Verbindung ist.

3. Verfahren zur Herstellung von selbstvernetzenden Lackbindemitteln auf der Basis von aminmodifizierten Epoxidharzestern, dadurch gekennzeichnet, daß man 5 bis 100, vorzugsweise 60 bis 100 Mol-% der Epoxidgruppen eines Epoxidharzes mit einem Epoxidäquivalent von 160 bis 2000 mit einer Carboxylverbindung der Formel

   HOOC-$R_1$-CO-$NR_2$-CO-NH-$R_3$-/NCO/,

   wobei die Reste die oben angegebene Bedeutung haben, und, in getrennten Verfahrensschritten oder gemeinsam, mit primären und/oder sekundären Aminen, sowie gegebenenfalls weiteren für diese Harze üblichen Modifikatoren umsetzt, wobei die Mengenverhältnisse so gewählt werden, daß das Endprodukt keine freien Epoxidgruppen und eine Aminzahl von mindestens 30 mg KOH/g aufweist.

4. Verfahren nach Anspruch 3, dadurch gekennzeichnet, daß man als Carboxylverbindung ein Umsetzungsprodukt eines substituierten Harnstoffs oder eines substituierten Biurets mit einem Dicarbonsäureanhydrid oder einer Dicarbonsäureanhydridgruppen aufweisenden Verbindung einsetzt.

5. Verfahren nach den Ansprüchen 3 und 4, dadurch gekennzeichnet, daß man die Reaktion der Carboxylverbindung mit dem Epoxidharz bei 70 bis 120 °C durchführt.

6. Verfahren nach den Ansprüchen 3 bis 5, dadurch gekennzeichnet, daß man eine Additionsverbindung von Maleinsäureanhydrid an isolierte Doppelbindungen aufweisende, längerkettige Verbindungen mit einem substituierten Harnstoff oder einem substituierten Biuret unter Ureidbildung reagiert und die so erhaltene Carboxylverbindung mit dem Epoxidharz umsetzt.

7. Verwendung der kationischen Lackbindemittel zur Formulierung von nach Protonierung wasserverdünnbaren Einbrennlacken, insbesonders von kathodisch abscheidbaren Elektrotauchlakken.

**Patentansprüche für folgenden Vertragsstaat : ES**

1. Verfahren zur Herstellung von selbstvernetzenden Lackbindemitteln auf der Basis von aminmodifizierten Epoxidharzestern, dadurch gekennzeichnet, daß man 5 bis 100, vorzugsweise 60 bis 100, Mol-% der Epoxidgruppen eines Epoxidharzes mit einem Epoxidäquivalent von 160 bis 2000 mit einer Carboxylverbindung der Formel

$$HOOC-R_1-CO-NR_2-CO-NH-R_3-/NCO/,$$

wobei

R$_1$      einen gesättigten oder ungesättigten, aliphatischen , cycloaliphatischen oder aromatischen Kohlenwasserstoffrest

R$_2$      einen gegebenenfalls eine tert. Aminogruppe aufweisenden aliphatischen Kohlenwasserstoffrest

R$_3$      einen aliphatischen, cycloaliphatischen oder aromatischen Kohlenwasserstoffrest,

- /NCO/      eine blockierte Isocyanatgruppe, darstellt

sowie gegebenenfalls die Gruppe -NR$_2$-CO-NH-R$_3$-/NCO/ ein aus einem substituierten Harnstoff oder einem substituierten Biuret entstandener Rest ist, der mindestens eine blockierte Isocyanatgruppe und gegebenenfalls eine tertiäre Aminogruppe aufweist,

in getrennten Verfahrensschritten oder gemeinsam, mit primären und/oder sekundären Aminen, sowie gegebenenfalls weiteren für diese Harze üblichen Modifikatoren umsetzt, wobei die Mengenverhältnisse so gewählt werden, daß das Endprodukt keine freien Epoxidgruppen und eine Aminzahl von mindestens 30 mg KOH/g aufweist.

2. Verfahren nach Anspruch 1, dadurch gekennzeichnet, daß man als Carboxylverbindung ein Umsetzungsprodukt eines substituierten Harnstoffs oder eines substituierten Biurets mit einem Dicarbonsäureanhydrid oder einer Dicarbonsäureanhydridgruppen aufweisenden Verbindung einsetzt.

3. Verfahren nach den Ansprüchen 1 und 2, dadurch gekennzeichnet, daß man die Reaktion der Carboxylverbindung mit dem Epoxidharz bei 70 bis 120° C durchführt.

4. Verfahren nach den Ansprüchen 1 bis 3, dadurch gekennzeichnet, daß man eine Additionsverbindung von Maleinsäureanhydrid an isolierte Doppelbindungen aufweisende, längerkettige Verbindungen mit einem substituierten Harnstoff oder einem substituierten Biuret unter Ureidbildung reagiert und die so erhaltene Carboxylverbindung mit dem Epoxidharz umsetzt.

5. Verwendung der kationischen Lackbindemittel zur Formulierung von nach Protonierung wasserverdünnbaren Einbrennlacken, insbesonders von kathodisch abscheidbaren Elektrotauchlakken.

**Claims**
**Claims for the following Contracting States :**
**BE, CH, DE, FR, GB, IT, NL, SE**

1. Self-crosslinking cationic paint binders based on amine-modified epoxide resin esters, characterised in that they have been obtained by esterifying

5 to 100, preferably 60 to 100, mol% of the epoxide groups of di- or poly-epoxide resins having an epoxide equivalent weight from 160 to about 2000 with carboxyl compounds of the formula

$$HOOC - R_1 - CO - NR_2 - CO - NH - R_3 - /NCO/ ,$$

where

R$_1$      is a saturated or unsaturated, aliphatic, cycloaliphatic or aromatic hydrocarbon radical,

R$_2$      is an aliphatic hydrocarbon radical which may carry a tertiary amino group,

R$_3$      is an aliphatic, cycloaliphatic or aromatic hydrocarbon radical,

- /NCO/      is a blocked isocyanate group, and, if appropriate, the group -NR$_2$-CO-NH-R$_3$-/NCO/ is a radical formed from a substituted urea or a substituted biuret, which carries at least one blocked isocyanate group and, if appropriate, a tertiary amino group,

and reacting the remaining epoxide groups of the reaction product with primary and/or secondary amines and, if appropriate, further modifiers conventional for these resins, to give an amine-modified epoxide resin ester free of epoxide groups having an amine number of at least 30 mg of KOH/g.

2. Paint binder according to Claim 1, characterised in that the carboxyl compound is a reaction product of a substituted urea or a substituted biuret with a dicarboxylic acid anhydride or a compound carrying dicarboxylic acid anhydride groups.

3. Process for the production of self-crosslinking paint binders based on amine-modified epoxide resin esters, characterised in that 5 to 100, preferably 60 to 100, mol% of the epoxide groups of an epoxide resin having an epoxide equivalent from 160 to 2000 are reacted with a carboxyl compound of the formula

HOOC-$R_1$-CO-N$R_2$-CO-NH-$R_3$-/NCO/,

where the radicals have the meaning indicated above, and, in separate process steps or simultaneously, with primary and/or secondary amines and, if appropriate, with further modifiers conventional for these resins, the quantitative ratios being selected such that the end product contains no free epoxide groups and has an amine number of at least 30 mg of KOH/g.

4. Process according to Claim 3, characterised in that a reaction product of a substituted urea or of a substituted biuret with a dicarboxylic acid anhydride or a compound carrying dicarboxylic acid anhydride groups is used as the carboxyl compound.

5. Process according to Claims 3 and 4, characterised in that the reaction of the carboxyl compound with the epoxide resin is carried out at 70 to 120°C.

6. Process according to Claims 3 to 5, characterised in that an addition compound of maleic anhydride to relatively long-chain compounds having isolated double bonds is reacted with a substituted urea or a substituted biuret with formation of the ureide and the carboxyl compound thus obtained is reacted with the epoxide resin.

7. Use of the cationic paint binders for formulating stoving enamels which are water-dilutable after protonation, in particular cathodically depositable electrodip coatings.

**Claims for the following Contracting State : ES**

1. Process for the production of self-crosslinking paint binders based on amine-modified epoxide resin esters, characterised in that
5 to 100, preferably 60 to 100, mol% of the epoxide groups of an epoxide resin having an epoxide equivalent from 160 to 2000 with a carboxyl compound of the formula

HOOC-$R_1$-CO-N$R_2$-CO-NH-$R_3$-/NCO/,

where
   $R_1$          is a saturated or unsaturated, aliphatic, cycloaliphatic or aromatic hydrocarbon radical,
   $R_2$          is an aliphatic hydrocarbon radical which may carry a tertiary amino group,
   $R_3$          is an aliphatic, cycloaliphatic or aromatic hydrocarbon radical,
   - /NCO/    is a blocked isocyanate group, and, if appropriate, the group -N$R_2$-CO-NH-$R_3$-/NCO/ is a radical formed from a substituted urea or a substituted biuret, which carries at least one blocked isocyanate group and, if appropriate, a tertiary amino group,
are reacted, in separate process steps or simultaneously, with primary and/or secondary amines and, if appropriate, further modifiers conventional for these resins, the quantitative ratios being selected such that the end product contains no free epoxide groups and has an amine number of at least 30 mg of KOH/g.

2. Process according to Claim 1, characterised in that a reaction product of a substituted urea or of a substituted biuret with a dicarboxylic acid anhydride or a compound carrying dicarboxylic acid anhydride groups is used as the carboxyl compound.

3. Process according to Claims 1 and 2, characterised in that the reaction of the carboxyl compound with the epoxide resin is carried out at 70 to 120°C.

4. Process according to Claims 1 to 3, characterised in that an addition compound of maleic anhydride to relatively long-chain compounds having isolated double bonds is reacted with a substituted urea or a substituted biuret with formation of the ureide and the carboxyl compound thus obtained is reacted with the epoxide resin.

5. Use of the cationic paint binders for formulating stoving enamels which are water-dilutable after protonation, in particular cathodically depositable electrodip coatings.

**Revendications**
**Revendications pour les Etats contractants suivants : BE, CH, DE, FR, GB, IT, NL, SE**

1. Liants cationiques autoréticulants pour laques, à base d'esters de résines époxy modifiés par des amines, caractérisés en ce qu'ils ont été obtenus par estérification de
5 à 100, de préférence 60 à 100%, molaires des groupes époxy de résines di- ou polyépoxy d'un poids d'équivalent époxy de 160 à environ 2000 avec des composés carboxylés de formule

$$HOOC\text{-}R_1\text{-}CO\text{-}NR_2\text{-}CO\text{-}NH\text{-}R_3\text{-/NCO/}$$

dans laquelle
$R_1$ représente un reste hydrocarboné aliphatique, cycloaliphatique ou aromatique saturé ou insaturé,
$R_2$ représente un reste hydrocarboné aliphatique présentant éventuellement un groupe amine tertiaire,
$R_3$ représente un reste hydrocarboné aliphatique, cycloaliphatique ou aromatique,
-/NCO/ représente un groupe isocyanate bloqué,
et le groupe $-NR_2\text{-}CO\text{-}NH\text{-}R_3\text{-/NCO/}$ est éventuellement un reste, formé à partir d'une urée substituée ou d'un biuret substitué, qui présente au moins un groupe isocyanate bloqué et éventuellement un groupe amine tertiaire,
et réaction des groupes époxy restants du produit de réaction, avec des amines primaires et/ou secondaires, ainsi qu'éventuellement avec d'autres modificateurs habituels pour ces résines pour former un ester de résine époxy modifié par des amines, exempt de groupes époxy, avec un indice d'amine d'au moins 30 mg de KOH/g.

2. Liants pour laques selon la revendication 1, caractérisés en ce que le composé carboxylé est un produit de réaction d'une urée substituée ou d'un biuret substitué avec un anhydride d'acide dicarboxylique ou un composé présentant des groupes anhydride d'acide dicarboxylique.

3. Procédé de préparation de liants autoréticulants pour laques, à base d'esters de résines époxy modifiés par des amines, caractérisé en ce que l'on fait réagir 5 à 100, de préférence 60 à 100%,molaires des groupes époxy d'une résine époxy ayant un équivalent d'époxy de 160 à 2000 avec un composé carboxylé de formule

$$HOOC\text{-}R_1\text{-}CO\text{-}NR_2\text{-}CO\text{-}NH\text{-}R_3\text{-/NCO/}$$

dans laquelle les restes ont la signification indiquée plus haut et, dans des étapes de procédé séparées ou ensemble, avec des amines primaires et/ou secondaires et éventuellement avec d'autres modificateurs habituels pour ces résines, en choisissant les proportions de telle façon que le produit final ne présente aucun groupe époxy libre et présente un indice d'amine d'au moins 30 mg de KOH/g.

4. Procédé selon la revendication 3, caractérisé en ce que l'on utilise comme composé carboxylé un produit de réaction d'une urée substituée ou d'un biuret substitué avec un anhydride d'acide dicarboxylique ou un composé présentant des groupes anhydride d'acide dicarboxylique.

5. Procédé selon les revendications 3 et 4, caractérisé en ce que l'on effectue la réaction du composé carboxylé avec la résine époxy entre 70 et 120°C.

6. Procédé selon les revendications 3 à 5, caractérisé en ce que l'on fait réagir un composé d'addition de l'anhydride maléique et de composés à longue chaîne présentant des doubles liaisons isolées avec une urée substituée ou un biuret substitué avec formation d'uréide et on fait réagir le composé carboxylé ainsi obtenu avec la résine époxy.

7. Utilisation des liants cationiques pour laques pour la formulation de laques à cuire diluables à l'eau après protonation, en particulier de laques pour trempage électrophorétique précipitables à la cathode.

**Revendications pour l'Etat contractant suivant: ES**

1. Procédé de préparation de liants autoréticulants pour laques, à base d'esters de résines époxy modifiés par des amines, caractérisé en ce que l'on fait réagir 5 à 100, de préférence 60 à 100%, molaires des groupes époxy d'une résine époxy ayant un équivalent d'époxy de 160 à 2000 avec un composé carboxylé de formule

HOOC-R$_1$-CO-NR$_2$-CO-NH-R$_3$-/NCO/

dans laquelle

R$_1$ représente un reste hydrocarboné aliphatique, cycloaliphatique ou aromatique saturé ou insaturé,

R$_2$ représente un reste hydrocarboné aliphatique présentant éventuellement un groupe amine tertiaire,

R$_3$ représente un reste hydrocarboné aliphatique, cycloaliphatique ou aromatique,

-/NCO/ représente un groupe isocyanate bloqué, et le groupe -NR$_2$-CO-NH-R$_3$-/NCO/ est éventuellement un reste, formé à partir d'une urée substituée ou d'un biuret substitué, qui présente au moins un groupe isocyanate bloqué et éventuellement un groupe amine tertiaire,

dans des étapes de procédé séparées ou ensemble, avec des amines primaires et/ou secondaires et éventuellement avec d'autres modificateurs habituels pour ces résines, en choisissant les proportions de telle façon que le produit final ne présente aucun groupe époxy libre et présente un indice d'amine d'au moins 30 mg de KOH/g.

2. Procédé selon la revendication 1, caractérisé en ce que l'on utilise comme composé carboxylé un produit de réaction d'une urée substituée ou d'un biuret substitué avec un anhydride d'acide dicarboxylique ou un composé présentant des groupes anhydride d'acide dicarboxylique.

3. Procédé selon les revendications 1 et 2, caractérisé en ce que l'on effectue la réaction du composé carboxylé avec la résine époxy entre 70 et 120° C.

4. Procédé selon les revendications 1 à 3, caractérisé en ce que l'on fait réagir un composé d'addition de l'anhydride maléique et de composés à longue chaîne présentant des doubles liaisons isolées avec une urée substituée ou un biuret substitué avec formation d'uréide et on fait réagir le composé carboxylé ainsi obtenu avec la résine époxy.

5. Utilisation des liants cationiques pour laques pour la formulation de laques à cuire diluables à l'eau après protonation, en particulier de laques pour trempage électrophorétique précipitables à la cathode.